# EUROPEAN PATENT SPECIFICATION

(11) **EP 3 309 001 B1**
(45) Date of publication and mention of the grant of the patent: **29.09.2021**
(21) Application number: 16199015.5
(22) Date of filing: 16.11.2016
(51) Int. Cl.: H01M 50/502, B60L 53/16, B66F 9/075, H02J 7/00, B60L 50/60, B60L 53/80, H01R 11/28, B60K 1/04

(54) **BATTERY PLUG-IN DEVICE FOR MATERIAL HANDLING EQUIPMENT**
STECKBARE BATTERIEVORRICHTUNG FÜR MATERIALHANDHABUNGSAUSRÜSTUNG
DISPOSITIF ENFICHABLE DE BATTERIE POUR UN ÉQUIPEMENT DE MANIPULATION DE MATÉRIAU

(30) Priority: 14.10.2016 CN 201610896611; 28.10.2016 US 201615337173
(43) Date of publication of application: 18.04.2018
(73) Proprietor: EP Equipment Co., Ltd., Anji Zhejiang (CN)
(72) Inventor: Linjie, Xu, Dipu, Anji, Zhejiang (CN); Minghui, Xu, Dipu, Anji, Zhejiang (CN)
(74) Representative: Vossius & Partner Patentanwälte Rechtsanwälte mbB

(56) References cited:
- EP-A1- 1 864 351
- EP-A1- 2 086 063
- EP-A1- 2 605 308
- EP-A1- 2 772 420
- EP-A1- 3 067 259
- EP-A2- 2 280 436
- CN-U- 203 377 457
- CN-Y- 2 210 477
- DE-A1-102009 024 696
- DE-A1-102012 016 641
- DE-T5-112012 001 985
- JP-A- H10 144 392
- JP-A- 2010 272 241
- US-A1- 2013 337 702
- L Wieland ET AL: "Wieland Katalog 2014", 96.022.5053.0 96, 30 December 2014 (2014-12-30), page 22, XP055382966, Retrieved from the Internet: URL:https://oxomi.com/catalog-media/913297 5/8d254f6ff0a44a22e18e6924f53aa905/65.pdf? name=gesis RST +Steckbare+Elektroinstallation+in+höchster +Schutzart+(IP6X)+(DEUTSCH)_65.pdf&inline= false [retrieved on 2017-06-20]

## Description

The invention relates to battery operated pallet truck including a battery plug-in device, and more particularly to a battery plug-in device that can secure a battery to a base and ensure safe and stable current output by using a first plug pedestal, first plug, and a retainer.

Material handling equipment is widely used in warehouses, and electric powered vehicles are continuing to become more popular for at least environmental and noise related advantages over gas powered vehicles. Electric powered vehicles also have advantages over manual powered vehicles relating to at least capacity, operator safety and efficiency. In a traditional configuration, a battery is fixed to the vehicle. When the battery is discharged, the vehicle must be shut down and be out of service while undergoing charging of the battery. It can take a long time to achieve a fully charged battery, which affects the efficiency of the material handling operations.

The invention for which protection is sought is defined by the claims. Disclosure not falling in the scope of the claims is presented for illustrative purpose.

The subject matter of this invention provides advantages over the battery systems of typical prior art electrical material handling equipment, such as pallet trucks, stackers, forklifts and the like. In contrast to prior art electric vehicle drive systems having a battery fixed to the vehicle, the present invention provides an example battery plug-in device that permits an operator to easily remove the battery from the vehicle and plug it into a similar base that is connected to a battery charger. Meanwhile, a fully-charged battery can be plugged into a base that is connected to the vehicle, to provide enhanced efficiency by allowing the vehicle to be placed back into service without having to wait for a battery onboard to be recharged. However, frequent plug-in and removal of a battery will tend to subject battery and base connection parts to wear, which may lead to loosening of the connect parts and/or poor electrical connections. The example battery plug-in device of the present invention includes structure to resist wear and loosening, improving the stability of repeated battery connections.

EP 3 067 259 A1 relates to a supporting structure for a battery in a vehicle including an electric motor that receives electric power from the battery.

EP 2 280 436 A2 relates to a battery pack that loads in a removable manner primarily in electric vehicles such as electric motor-bikes (e.g. electric motor scooters and motorcycles) and bicycles with electrical-assist to supply power to a motor that drives the electric vehicle, and to the electric vehicle equipped with that battery pack.

DE 10 2009 024696 A1 disclose a truck having a battery accommodating device for separately accommodating battery elements of a battery unit and connecting them with electric supply lines of the truck.

CN 20 3377457 U discloses a high-voltage power supply module connector.

EP 3 067 259 A1 relates to a supporting structure for a battery in a vehicle including an electric motor that receives electric power from the battery.

EP 2 280 436 A2 relates to a battery pack that loads in a removable manner primarily in electric vehicles such as electric motor-bikes (e.g. electric motor scooters and motorcycles) and bicycles with electrical-assist to supply power to a motor that drives the electric vehicle, and to the electric vehicle equipped with that battery pack.

In a first aspect, the invention provides a pallet truck according to claim 1. The pallet truck comprises a battery plug-in device, the battery plug-in device including a battery and a base that receives the battery. The battery includes a battery compartment having a bottom that includes a first plug pedestal, with a first plug connected to the first plug pedestal. The battery base includes a receptacle which includes a second plug pedestal, with the second plug pedestal connected to a retainer, and a second plug connected to the second plug pedestal. The first plug, first plug pedestal, and retainer secure the battery in the battery base, and ensure safe and stable current output.

It is to be understood that both the foregoing general description and the following detailed description are exemplary and provided for purposes of explanation only, and are not restrictive with respect to the claimed subject matter. Further features and advantages will become more fully apparent in the following description of the example preferred embodiment and from the appended claims.

In describing the preferred example, references are made to the accompanying drawing figures wherein like parts have like reference numerals. For ease of viewing and comprehension, several of the figures show less than an entire battery system or show only particular components of the system.
FIG. 1 is a perspective exploded view of a battery plug-in device that includes a battery and a base.
FIG. 2 is a cross-sectional view of the battery plug-in device shown in FIG. 1, with the battery installed in the base and, for ease of viewing, focusing on some elements on the left side of the assembly, while focusing on other elements on the right side of the assembly.
FIG. 3 is a close up perspective view of a first plug of the battery plug-in device shown in FIG. 1.
FIG. 4 is a close up perspective view of a second plug of the battery plug-in device shown in FIG. 1, which cooperates with the first plug.
FIG. 5 is a close up perspective view of a first plug pedestal of the battery plug-in device shown in FIG. 1.
FIG. 6 is a close up perspective view of a retainer of the battery plug-in device shown in FIG. 1.
FIG. 7 is a front perspective view of an example pallet truck utilizing the battery plug-in device shown in FIG. 1.
FIG. 8 is a rear perspective view of the example pallet truck utilizing the battery plug-in device shown in FIG. 7.

It should be understood that the drawings are not necessarily to scale. While some mechanical details of material handling equipment have been omitted, including some details of fastening or connecting means and other plan and section views of the particular components, such details are considered to be within the comprehension of those skilled in the art in light of the present invention. It also should be understood that the present invention is not limited to the examples illustrated and described.

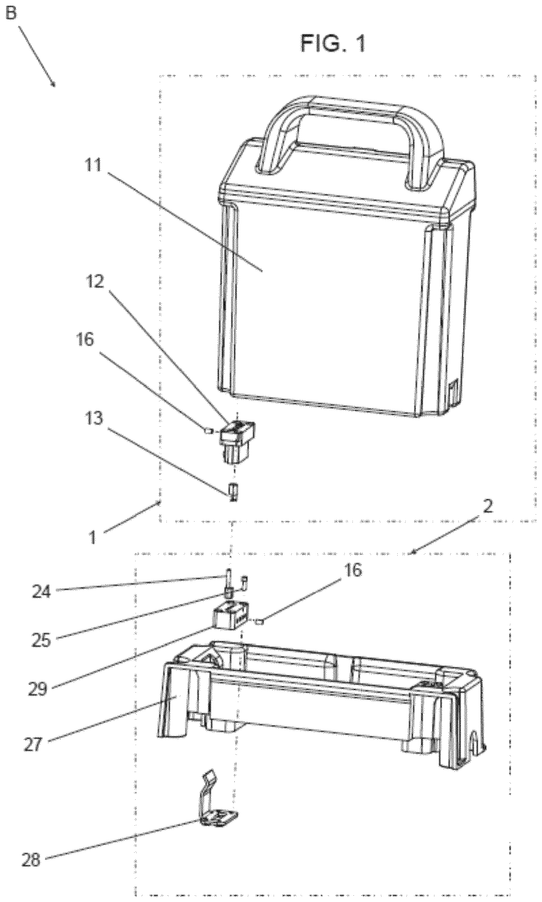

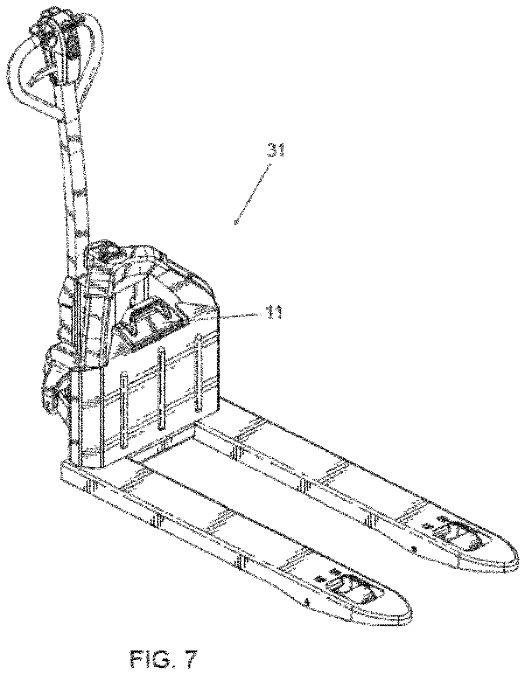

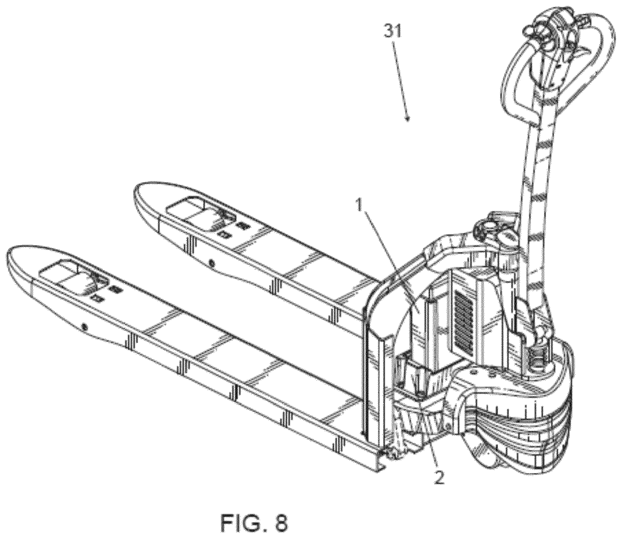

This invention provides solutions to the technical problems presented by battery systems of battery operated material handling equipment, such as are used in pallet trucks, stackers, forklifts and the like. An example of a new battery plug-in device B is described further herein in reference to a preferred embodiment shown in the accompanying drawing FIGS. 1-6, and with utilization in material handling equipment, such as an example vehicle 31 in the form of a pallet truck shown in FIGS. 7 and 8. It will be appreciated, however, that the invention may be constructed and configured in various ways and is not limited to the specific example shown and described herein, and its use is not limited to pallet trucks.

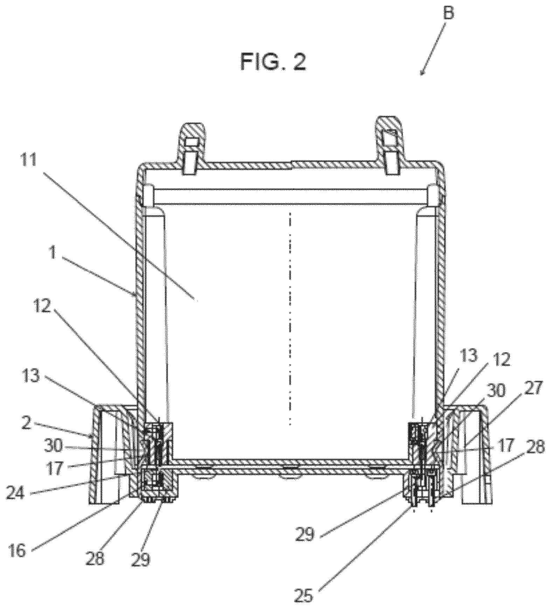

To provide a battery plug-in device B that permits improved efficiency and solves the loosening problem may tend to occur with traditional plug-in batteries, the present invention provides a solution that includes a battery plug-in device B for material handling equipment that includes a battery 1 and a base 2, as may be seen in FIG. 1 and 2. It will be appreciated that a battery 1 and base 2 may include more than one set of components to complete an electrical connection and retention of the battery 1 in the base 2, such as may be seen in FIG. 2. However, it should be understood that for ease of viewing, FIG. 2 focuses on some of the components on the left side of the assembly, while focusing on other components on the right side of the assembly, and where when fully assembled, the left and right sides of the assembly would include similar components.

As may be seen in FIG. 1 and on the left side of the battery plug-in device B in FIG. 2, the battery 1 includes a battery compartment 11 having a bottom that includes a first plug pedestal 12, with a first plug 13 connected to the first plug pedestal 12. The connection of the first plug 13 to the first plug pedestal 12 may be by a fastener 16, shown for example in the form of a screw, although it will be appreciated that the components may be configured to use a different suitable fastener and/or more than one fastener. In this invention, an example of the first plug 13 is provided in the form of a female plug.

As may be seen in FIG. 1 and on the right side of the assembly in FIG. 2, the base 2 includes a receptacle 27 having a second plug pedestal 29, with the second plug pedestal 29 connected to a retainer 28. The connection of the retainer 28 to the second plug pedestal 29 may be by at least one retainer fastener 25, shown for example in the form of a screw, although it will be appreciated that the components may be configured to use a different suitable retainer fastener and/or more than one retainer fastener. Also, as seen on the left side of the assembly in FIG. 2, a second plug 24 is connected to the second plug pedestal 29. The connection of the second plug 24 to the second plug pedestal 29 may be by a second fastener 16, shown for example in the form of a screw, although it will be appreciated that the components may be configured to use a different suitable fastener and/or more than one fastener. In this invention, the second plug 24 is provided in the form of a male plug that may be inserted into the first plug 13.

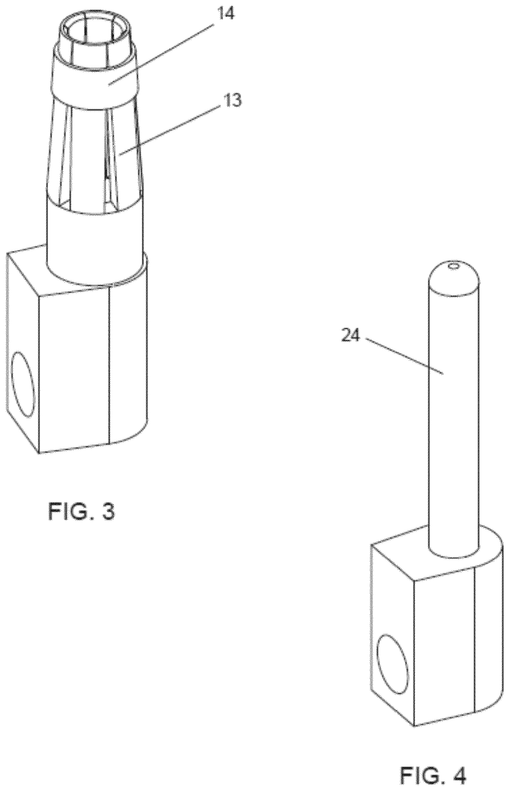

As may be seen in FIG. 3, the head of the example first plug 13 also may include spring clamps 14, which receive the second plug 24 shown in FIG. 4. The spring clamps 14 help to tightly secure the second plug 24 to the example first plug 13 when the battery 1 is plugged into the base 2, electrically securing the battery 1 to the base 2 whether for use in a battery charger having a base 2 or during use of material handling equipment having a base 2, such as a vehicle 31 in the form of a pallet truck that is shown in FIGS. 7 and 8.

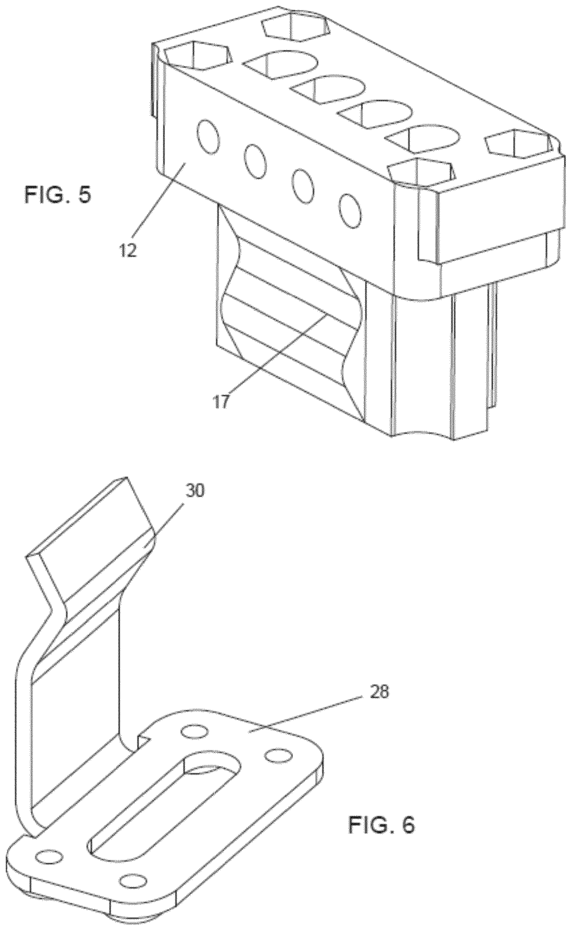

In addition, improved retention of the battery 1 within the base 2 is achieved with a groove 17 on a side of the first plug pedestal 12 that receives a protruding portion 30 on the retainer 28, which may be seen in FIG. 2 by viewing features on both sides of the assembly, and are shown separately in FIGS. 5 and 6. Resilience of the retainer 28 helps to permit the protruding portion 30 to slide and deflect to be received by the groove 17 on the first plug pedestal 12, so as to tightly secure the first plug pedestal 12 and battery 1 to the base 2 when the battery 1 is plugged into the base 2. Moreover, it will be appreciated that each first plug pedestal 12 of the battery 1 may hold more than one first plug 13, and each second plug pedestal 29 of the base 2 may hold more than one second plug 24, as desired.

The example battery plug-in device B provides a low cost, simple structure that facilitates easy plug-in and removal of the battery, ensures stable battery connections and enhances efficiency by keeping a vehicle in service via convenient separate charging of a battery so as to avoid interruptions to charge an onboard battery. The structure also permits easy replacement of the electrical components, if needed.

Thus, the present invention presents alternatives to prior art battery systems for material handling equipment. The new battery plug-in device provides advantageous features by permitting convenient battery removal and recharging of a battery separated from a vehicle, while a second battery may be installed to keep the vehicle in service. This provides a low cost, convenient solution, while significantly improving utility and efficiency of such electrically operated material handling equipment.

It will be appreciated that the present invention shows and demonstrates a preferred example battery plug-in device for material handling equipment, which is discussed in the context of an example pallet truck.

## Claims

1. A pallet truck comprising a battery plug-in device (B), the battery plug-in device comprising:
a battery (1) comprising a battery compartment (11) having a bottom, a first plug pedestal (12), and a first plug (13) connected to the first plug pedestal (12) by a fastener (16); and
a base (2) that includes a receptacle (27), a second plug pedestal (29), a second plug (24) connected to the second plug pedestal (29) and a retainer (28) connected to the second plug pedestal (29),
wherein the first plug (13) receives the second plug (24),
wherein the retainer (28) includes a protruding portion (30),
wherein a groove (17) is formed on a side of the first plug pedestal (12),
wherein the groove (17) receives the protruding portion (30) of the retainer (28) when the battery (1) is plugged into the base (2),
wherein resilience of the retainer (28) helps to permit the protruding portion to slide and deflect to be received by the groove (17), and
wherein the first plug (13) is configured as a female plug that comprises a head having a spring clamp (14) to tightly secure the second plug (24) to the first plug (13) and the second plug (24) being configured as a male plug.

2. The pallet truck according to claim 1, wherein the retainer (28) is connected to the second plug pedestal (29) by a retainer fastener (25) such as a screw.

3. The pallet truck according to claim 1 or 2, wherein the second plug (24) is connected to the second plug pedestal (29) by a second fastener (16) such as a screw.

4. The pallet truck according to any of the preceding claims, wherein the battery (1) further comprises another first plug pedestal, and another first plug connected to the another first plug pedestal.

5. The pallet truck according to claim 4, wherein the receptacle (27) of the base (2) further comprises another second plug pedestal and another second plug connected to the another second plug pedestal.

6. The pallet truck according to claim 5, wherein the receptacle (27) of the base (2) further comprises another retainer connected to the another second plug pedestal.

7. The pallet truck according to claim 6, wherein the base (2) further comprises another retainer connected to the another second plug pedestal.

## Patentansprüche

1. Hubwagen, der eine Batterie-Steckvorrichtung (B) aufweist, wobei die Batterie-Steckvorrichtung aufweist:
eine Batterie (1), aufweisend ein Batteriefach (11) mit einem Boden, einem ersten Stecksockel (12) und einen ersten Stecker (13), der mit dem ersten Stecksockel (12) durch ein Befestigungsmittel (16) verbunden ist; und
eine Basis (2), die eine Aufnahme (27), einen zweiten Stecksockel (29), einen zweiten Stecker (24), der mit dem zweiten Stecksockel (29) verbunden ist, und eine Halterung (28), die mit dem zweiten Stecksockel (29) verbunden ist, umfasst,
wobei der erste Stecker (13) den zweiten Stecker (24) aufnimmt,
wobei die Halterung (28) einen vorstehenden Abschnitt (30) umfasst,
wobei eine Nut (17) auf einer Seite des ersten Stecksockels (12) gebildet ist,
wobei die Nut (17) den vorstehenden Abschnitt (30) der Halterung (28) aufnimmt, wenn die Batterie (1) in die Basis (2) eingesteckt ist,
wobei die Nachgiebigkeit der Halterung (28) dem vorstehenden Abschnitt gestattet, dass er zur Aufnahme durch die Nut (17) geschoben und ausgelenkt werden kann, und
wobei der erste Stecker (13) als Steckbuchse ausgebildet ist, die einen Kopf mit einer Federklemme (14) zum sicheren Befestigen des zweiten Steckers (24) am ersten Stecker (13) aufweist, und der zweite Stecker (24) als Steckelement ausgebildet ist.

2. Hubwagen nach Anspruch 1, wobei die Halterung (28) mit dem zweiten Stecksockel (29) durch ein Halterungsbefestigungsmittel (25) wie zum Beispiel eine Schraube verbunden ist.

3. Hubwagen nach Anspruch 1 oder 2, wobei der zweite Stecker (24) mit dem zweiten Stecksockel (29) durch ein zweites Befestigungsmittel (16) wie zum Beispiel eine Schraube verbunden ist.

4. Hubwagen nach einem der vorstehenden Ansprüche, wobei die Batterie (1) ferner einen weiteren ersten Stecksockel und einen weiteren ersten Stecker, der mit dem weiteren ersten Stecksockel verbunden ist, aufweist.

5. Hubwagen nach Anspruch 4, wobei die Aufnahme (27) der Basis (2) ferner einen weiteren zweiten Stecksockel und einen weiteren zweiten Stecker, der mit dem weiteren zweiten Stecksockel verbunden ist, aufweist.

6. Hubwagen nach Anspruch 5, wobei die Aufnahme (27) der Basis (2) ferner eine weitere Halterung, die mit dem weiteren zweiten Stecksockel verbunden ist, aufweist.

7. Hubwagen nach Anspruch 6, wobei die Basis (2) ferner eine weitere Halterung, die mit dem weiteren zweiten Stecksockel verbunden ist, aufweist.

## Revendications

1. Transpalette, comprenant un dispositif de batterie enfichable (B), ledit dispositif de batterie enfichable comprenant :
une batterie (1) comprenant un compartiment (11) de batterie présentant un fond, un premier socle de prise (12), et une première prise (13) connectée au premier socle de prise (12) par un élément de connexion (16) ; et
une base (2) présentant un réceptacle (27), un deuxième socle de prise (29), une deuxième prise (24) connectée au deuxième socle de prise (29), et un élément de retenue (28) connecté au deuxième socle de prise (29),
où la première prise (13) reçoit la deuxième prise (24),
où l'élément de retenue (28) présente une partie saillante (30),
où une rainure (17) est formée sur un côté du premier socle de prise (12),
où la rainure (17) reçoit la partie saillante (30) de l'élément de retenue (28) quand la batterie (1) est fichée dans la base (2),
où l'élasticité de l'élément de retenue (28) assiste le glissement et l'inflexion de la partie saillante pour sa réception dans la rainure (17), et
où la première prise (13) est configurée comme prise femelle comportant une tête avec une pince à ressort (14) pour fixer fermement la deuxième prise (24) à la première prise (13), et la deuxième prise (24) est configurée comme une prise mâle.

2. Transpalette selon la revendication 1, où l'élément de retenue (28) est connecté au deuxième socle de prise (29) par un élément de de fixation et de retenue (25) tel qu'une vis.

3. Transpalette selon la revendication 1 ou la revendication 2, où la deuxième prise (24) est connectée au deuxième socle de prise (29) par un deuxième élément de connexion (16) tel qu'une vis.

4. Transpalette selon l'une des revendications précédentes, où la batterie (1) comprend en outre un autre premier socle de prise, et une autre première prise connectée à l'autre premier socle de prise.

5. Transpalette selon la revendication 4, où le réceptacle (27) de la base (2) comprend en outre un autre deuxième socle de prise et une autre deuxième prise connectée à l'autre deuxième socle de prise.

6. Transpalette selon la revendication 5, où le réceptacle (27) de la base (2) comprend en outre un autre élément de retenue connecté à l'autre deuxième socle de prise.

7. Transpalette selon la revendication 6, où la base (2) comprend en outre un autre élément de retenue connecté à l'autre deuxième socle de prise.
